Europäisches Patentamt

European Patent Office

Office européen des brevets

(19)

(11) **EP 0 412 086 B1**

(12) **EUROPÄISCHE PATENTSCHRIFT**

(45) Veröffentlichungstag und Bekanntmachung des Hinweises auf die Patenterteilung:
**20.11.1996 Patentblatt 1996/47**

(21) Anmeldenummer: **89902757.7**

(22) Anmeldetag: **13.02.1989**

(51) Int Cl.⁶: **F01N 3/20**, F01N 3/28, B01D 53/38

(86) Internationale Anmeldenummer:
**PCT/EP89/00129**

(87) Internationale Veröffentlichungsnummer:
**WO 89/10470 (02.11.1989 Gazette 1989/26)**

(54) **ANORDNUNG ZUR BESCHLEUNIGUNG DES ANSPRECHENS EINES ABGASKATALYSATORS**

ARRANGEMENT FOR ACCELERATING THE RESPONSE OF AN EXHAUST GAS CATALYST

DISPOSITIF POUR ACCELERER LA REPONSE D'UN CATALYSEUR DE GAZ D'ECHAPPEMENT

(84) Benannte Vertragsstaaten:
**DE FR GB IT SE**

(30) Priorität: **25.04.1988 DE 3813928**

(43) Veröffentlichungstag der Anmeldung:
**13.02.1991 Patentblatt 1991/07**

(73) Patentinhaber: **Emitec Gesellschaft für Emissionstechnologie mbH**
**D-53797 Lohmar (DE)**

(72) Erfinder:
• **MAUS, Wolfgang**
  **D-5060 Bergisch Gladbach 1 (DE)**
• **SWARS, Helmut**
  **D-5060 Bergisch Gladbach 1 (DE)**
• **BREUER, Hans-Jürgen**
  **D-5063 Overath 7 (DE)**
• **CYRON, Theodor**
  **D-5060 Bergisch Gladbach 1 (DE)**

(74) Vertreter: **Kahlhöfer, Hermann, Dipl.-Phys. et al**
**Patent- und Rechtsanwälte**
**Bardehle-Pagenberg-Dost-Altenburg-**
**Frohwitter-Geissler & Partner,**
**Xantener Strasse 12**
**40474 Düsseldorf (DE)**

(56) Entgegenhaltungen:
**DE-A- 2 251 631          US-A- 3 889 464**

**Beschreibung**

Die vorliegende Erfindung betrifft ein Verfahren nach dem Anspruch 1 und eine Anordnung nach dem Anspruch 2.

Ausgehend von dem weithin bekannten Stand der Technik bei Kraftfahrzeugkatalysatoren, nämlich dem geregelten Dreiwegekatalysator, beschäftigt sich die vorliegende Erfindung mit der Beschleunigung des Ansprechens solcher Katalysatoranordnungen. Bisher werden in vielen Fällen zur Verringerung des Schadstoffausstoßes in der Kaltstartphase eines Kraftfahrzeuges sogenannte Startkatalysatoren, auch Vorkatalysatoren genannt, eingesetzt. Solche motornah eingebauten Startkatalysatoren, welche metallische Tragstrukturen aufweisen, werden schneller als die voluminösen Hauptkatalysatoren aufgeheizt, da sie näher am Motor angeordnet sind und ein geringeres Volumen aufweisen. Trotzdem benötigen auch Startkatalysatoren eine gewisse Zeit bis zum Ansprechen, da ihre katalytisch aktive Masse, deren keramisches Trägermaterial und die metallische Tragstruktur zunächst vom Abgas aufgeheizt werden müssen. Hierbei entziehen sie dem Abgas zunächst Wärme, wodurch auch die weiter hinten angeordneten Hauptkatalysatoren langsamer auf Betriebstemperatur kommen.

Als metallische Tragstrukturen sind eine große Anzahl von Varianten bekannt, die zum Beispiel in folgenden Schriften ausführlich erläutert sind:

EP-C-0 049 489, EP-C-0 121 174, EP-C-0 121 175, EP-A- 245 737, EP-A-0 245 738

Insbesondere sind aus diesen Schriften auch sogenannte S-förmige Katalysator-Trägerkörper und auch solche mit U-förmigen Blechlagen bekannt.

Schließlich ist es auch seit langem bekannt, daß eine metallische Trägerstruktur elektrisch beheizt werden kann. Dies ist beispielsweise in der DE-PS-563 757 beschrieben. Andere Versuche, einen Katalysatorkörper mittels eines elektrischen Heizelementes zu beheizen, sind aus der DE-AS-22 30 663 bekannt. Die direkte elektrische Beheizung von Katalysator-Trägerkörpern stieß jedoch bisher auf große Schwierigkeiten, da die üblichen metallischen Strukturen einen viel zu geringen elektrischen Widerstand aufweisen, als daß sie mit den bei Kraftfahrzeugen üblichen und vorhandenen elektrischen Spannungen direkt als Heizkörper benutzt werden können. In der DE-PS-563 757 wurden daner nur gesonderte Teilbereiche beheizt, die so gestaltet sein konnten, daß sie einen geeigneten Widerstand haben. In der DE-AS-22 30 663 wird ein gesondertes Heizelement benutzt, welches nicht gleichzeitig als Katalysator-Trägerkörper dient.

Die US-PS 3,723,070 zeigt außerdem eine Art beheizbaren Vorkatalysator, der jedoch aus von Strom durchflössenen Drähten aufgesamt ist.

Würde man andererseits bei spiralig gewickelten Katalysator-Trägerkörpern durch geeignete Isolation der Blechlagen die gesamte Länge des aufgewickelten Bleches ausnutzen, so würde sich ein viel zu hoher Widerstand ergeben, welcher keine genügende Stromstärke für die zur Beheizung erforderliche Leistung zulassen würde.

Aufgabe der vorliegenden Erfindung ist daher ein Verfahren zur elektrischen Beheizung und damit Beschleunigung des Ansprechens eines Abgaskatalysators sowie eine geeignete Anordnung zur Durchführung des Verfahrens Zur Lösung dieser Aufgaben werden ein Verfahren gemäß den Merkmalen des Anspruchs 1 und eine Anordnung gemäß den Merkmalen des Anspruchs 2 angegeben. Vorteilhafte Ausgestaltungen sind in den Unteransprüchen enthalten.

Wesentlich für die vorliegende Erfindung ist es, daß der Abgaskatalysator-Trägerkörper aus Metall besteht und direkt durch die Ohm'sche Wärme eines in ihm fließenden Stromes aufgeheizt wird. Wie anhand der Zeichnung noch näher erläutert wird, unterscheidet sich die Erfindung vor allem dadurch vom Stand der Technik, daß nicht versucht wird, den Abgasstrom selbst aufzuheizen, was elektrisch wegen der dafür erforderlichen Leistung praktisch nicht wirkungsvoll möglich ist. Außerdem wird auch nicht versucht, über verhältnismäßig lange wege der katalytisch aktiven Schicht Wärme zuzuführen. Die schlechte Wärmeleitfähigkeit von keramischen Materialien oder sehr langen Wegen in dünnen metallischen Blechen läßt eine solche Methode ebenfalls nicht wirkungsvoll erscheinen. Demgegenüber wird gemäß der vorliegenden Erfindung die Wärme gleichmäßig verteilt im Katalysator-Trägerkörper erzeugt und muß jeweils nur eine ganz geringe keramische Schicht bis zur katalytisch aktiven Zone durchdringen.

Die Verwendung einer Kombination von Hauptkatalysatoren und elektrisch beheizten Vorkatalysatoren ist besonders dann vorteilhaft, wenn entweder die elektrische Leistung zur Aufheizung der gesamten Hauptkatalysatoren nicht ausreicht oder diese aufgrund ihrer Bauart nicht elektrisch beheizbar sind. In diesem Falle ermöglichen die erfindungsgemäßen Anordnungen eine Verbesserung des an sich bekannten Prinzips der Startkatalysatoren. Durch elektrische Beheizung von Vorkatalysatoren springen diese noch früher an als übliche Startkatalysatoren und bringen dadurch die exotherme katalytische Reaktion in Gang, welche auch die nachgeordneten Hauptkatalysatoren schneller erwärmt.

In den abhängigen Ansprüchen sind verschiedene Varianten von Anordnungen elektrisch beheizbarer Katalysator-Trägerkörper angegeben. Gemeinsam ist diesen, daß sie alle durch Spalte und/oder elektrisch isolierende Zwischenschichten so unterteilt sind, daß sich mindestens ein elektrischer Strompfad durch den Katalysator-Trägerkörper mit einem elektrischen Widerstand zwischen 0,2 und 2 Ohm ergibt. Dieser Widerstand ist nötig, um eine elektrische Leistung von 50 bis 500 Watt bei üblichen 12-Volt-Anlagen zu erzielen. Zu berücksichtigen ist dabei, daß bei Stromstärken von 30 bis 50 Ampere bereits erhebliche Verluste in den Zuleitungen auftreten können, so daß am Katalysator-Trägerkörper selbst möglicherweise nur noch eine Spannung von beispielsweise 10 Volt anliegt.

Sofern in einem Fahrzeug mehrere elektrisch beheizbare Katalysatoren vorhanden sind, so gibt es immer verschiedene Varianten der elektrischen Zusammenschaltung. Entweder können die einzelnen Körper mit einem hohen Widerstand ausgebildet sein und dann parallel geschaltet werden, oder sie weisen einen relativ niedrigen elektrischen Widerstand auf und sind dementsprechend in Reihe geschaltet. Auch zeitabhängige Umschaltung von Parallel- zu Reihenschaltung kann vorgesehen werden, sofern die elektrische Heizleistung während des Aufheizintervalles variiert werden soll.

Die üblicherweise verwendeten hochtemperaturkorrosionsfesten Bleche mit einer Dicke von etwa 0,03 bis 0,06 mm hätten auf der gesamten Länge, die für die Bildung eines Katalysator-Trägerkörpers benötigt wird, einen für die vorgesehene elektrische Beheizung zu hohen Widerstand. Ein Katalysator-Trägerkörper, bei welchem sich alle strukturierten Bleche berühren oder sogar fügetechnisch verbunden sind, hätte einen viel zu geringen Widerstand für eine elektrische Beheizung mit 12 Volt. Im Ergebnis muß daher ein Katalysator-Trägerkörper so unterteilt werden, daß abhängig von seinem Gesamtvolumen ein Strompfad mit einem geeigneten Zusammenwirken von Länge und Leitfähigkeit entsteht. Eine Möglichkeit ist dabei die Unterteilung des Querschnittes in elektrisch hintereinander gereihte Segmente, die beispielsweise jeweils aus mehr als vier parallel geschalteten Blechlagen bestehen, vorzugsweise aus acht bis zwölf Blechlagen.

Eine weitere Möglichkeit ist die Unterteilung des Katalysator-Trägerkörpers in axial hintereinanderliegende Schichten, welche elektrisch in Reihe geschaltet sind. Beide Möglichkeiten können auch kombiniert verwendet werden, wie anhand der Ausführungsbeispiele erläutert wird.

Einige Besonderheiten ergeben sich bei der Einbindung des elektrisch beheizbaren Katalysator-Trägerkörpers in ein Mantelrohr, da hier zumindest Teile des Katalysator-Trägerkörpers von dem Mantelrohr elektrisch isoliert sein müssen. Ferner müssen geeignete isolierte Durchführungen für die elektrischen Zuleitungen vorgesehen werden. Dies bereitet jedoch beispielsweise bei Verwendung von aus Halbschalen zusammengesetzten Mantelrohren keine größeren Probleme. Die Isolierung zwischen Katalysator-Trägerkörper und Mantelrohr kann dabei gleichzeitig eine thermische und elektrische Isolierung bewirken, was besonders vorteilhaft ist.

Ausführungsbeispiele und das Umfeld der Erfindung sind in der Zeichnung, teilweise schematisch, dargestellt. Es zeigen

Figur 1 ein teilweise zweisträngig aufgebautes Abgassystem eines Kraftfahrzeuges mit unterschiedlichen Positionen für die Start- und Hauptkatalysatoren,

Figur 2 eine Prinzipschaltung für elektrisch beheizbare Katalysatoren,

Figur 3 eine Prinzipschaltung für scheibenweise beheizbare Katalysatoren,

Figur 4 ein Diagramm über Temperaturen im Abgas- bzw. Katalysatorsystem eines Kraftfahrzeuges in Abhängigkeit von der Zeit nach dem Betriebsbeginn,

Figur 5 einen mäanderförmig geschichteten Katalysator-Trägerkörper,

Figur 6 einen Katalysator-Trägerkörper mit U-förmig verlaufenden Blechlagen und entsprechenden Strompfaden,

Figur 7 einen Blechstapel mit Einschnürungen,

Figur 8 einen aus diesem Blechstapel hergestellten, mäanderförmig geschichteten Katalysator-Trägerkörper,

Figur 9 einen Ausschnitt aus Figur 8 zur Verdeutlichung der Isolierung des Blechstapels gegenüber dem Mantelrohr,

Figur 10 einen elektrisch beheizbaren Katalysator-Trägerkörper aus einem gegensinnig verschlungenen Blechstapel (S-Form) mit isolierenden Zwischenschichten,

Figur 11 einen aus Katalysatorkörpern gemäß Figur 10 zusammengesetzten Mehrscheibenkatalysator mit schematisch angedeuteter elektrischer Zusammenschaltung,

Figur 12 einen weiteren Katalysator-Trägerkörper aus gegensinnig verschlungenen Blechen mit Mantelrohr und Ausführung der elektrischen Anschlüsse und

Figur 13 einen Längsaxialschnitt durch einen Katalysator-Trägerkörper, der aus zwei Scheiben gemäß Figur 12 aufgebaut ist.

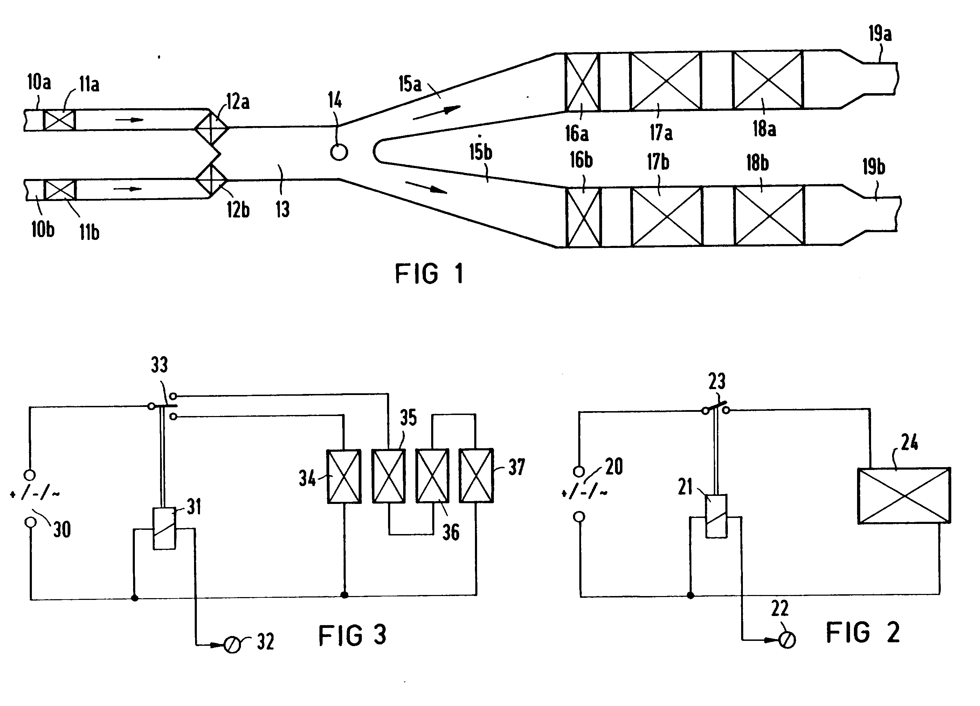

In Figur 1 ist schematisch ein teilweise zweisträngiges Abgassystem eines Kraftfahrzeuges dargestellt. Die im folgenden gemachten Ausführungen gelten jedoch auch für einsträngig aufgebaute Anlagen, bei denen jeweils der untere Zweig 10b, 11b, 12b, 15b, 16b, 17b, 18b, 19b entfällt. Das Auspuffsystem führt die Abgase mit Motorauslaßleitungen 10a, 10b zu einer Mischstrecke 13, in der eine Lamda-Sonde angeordnet ist. Von dort führen Abgasleitungen 15a, b zu den Hauptkatalysatoren 17a, 17b, 18a, 18b und von dort zu Auspuffleitungen 19a, 19b. 0b die Hauptkatalysatoren aus nur einem Körper oder, wie dargestellt, aus zwei Körpern bestehen, hängt von der Größe und Leistung des Motors ab. In Figur 1 sind drei mögliche Positionen für elektrisch beheizte Katalysatoren angegeben. Die Position 1 ist mit 11a, 11b bezeichnet, Position 2 mit 12a, 12b und Position 3 mit 16a, 16b. Im folgenden werden die Vor- und Nachteile dieser Positionen einzeln abgehandelt, jedoch sind auch Kombinationen denkbar, bei denen zwei oder alle diese Positionen mit beheizten Katalysatoren bestückt werden. Position 1 ist die für Startkatalysatoren übliche Anordnung, wobei die Katalysatoren wegen ihrer Motornähe schnell aufgeheizt werden und daher frühzeitig ansprechen, allerdings dabei auch hohe thermische Wechselbelastungen ertragen müssen. Durch elektrische Beheizung kann das Ansprechverhalten in dieser Position noch verbessert werden, jedoch ist der folgende Abgasweg bis zur Position der Hauptkatalysatoren relativ lang, so daß sich die Abgase kurz nach Betriebsbeginn zunächst bis zum Hauptkatalysator wieder soweit abkühlen können, daß das Ansprechverhalten der Hauptkatalysatoren nur in begrenztem Umfang verbessert wird.

Die Position 2 liegt einerseits etwas weiter entfernt vom Motor, so daß die thermischen Wechselbelastungen der Katalysator-Trägerkörper verringert werden, und andererseits schon näher am Hauptkatalysator, so daß dessen Ansprechverhalten schon etwas begünstigt wird. Zusätzlich hat die Position 2 den Vorteil, daß die dort frühzeitig ansprechenden Katalysatoren das Ansprechverhalten der Lamda-Sonde 14 verbessern.

Die Position 3 ist günstig, um mit dem Ansprechen der Startkatalysatoren 16a, 16b auch das Ansprechen der Hauptkatalysatoren 17a, 17b, 18a, 18b schnell zu fördern. Durch die Entfernung vom Motor sprechen allerdings die Startkatalysatoren in dieser Position trotz Beheizung erst später an.

In jeder der angegebenen Positionen haben Startkatalysatoren, insbesondere elektrisch beheizbare Startkatalysatoren, jedoch erhebliche Vorteile, so daß es von den einzelnen Randbedingungen abhängt, welche der Positionen oder welche Kombination dieser Positionen besonders günstig ist. Dabei ist auch nicht entscheidend, ob es sich bei den Trägerkörpern der Hauptkatalysatoren um keramische oder metallische Träger handelt.

In den Figuren 2 und 3 sind schematische Prinzipschaltungen für elektrisch beheizbare Katalysatoren angegeben. In Figur 2 wird der beheizbare Katalysator 24 aus einer Stromquelle 20 über einen Schalter 23 mit Strom versorgt. Hier wie im folgenden ist durch die Bezeichnung +/-/ angedeutet, daß es für das Wesen der Erfindung keine Rolle spielt, ob die Stromversorgung aus einer Batterie und mit Gleichstrom oder aus einer Lichtmaschine und mit Wechselstrom erfolgt. Im allgemeinen wird nach dem Erreichen bestimmter Betriebszustände eine weitere elektrische Beheizung des Katalysators nicht mehr notwendig sein, weshalb der Schalter 23 mit einem Zeitrelais 21 und dem Zündschloß 22 gekoppelt ist.

Auch in Figur 3 wird ein elektrisch beheizbarer Katalysator aus einer Stromquelle 30 über einen Schalter 33 mit Strom versorgt, welcher über ein Zeitrelais 31 mit dem Zündschloß 32 in Verbindung steht. In diesem Ausführungsbeispiel besteht jedoch der Katalysator aus mehreren einzeln beheizbaren Teilbereichen 34, 35, 36, 37, bei welchen zunächst der erste Teilbereich 34 einzeln und mit höherem Strom beheizt werden kann, und erst später die anderen Teilbereiche 35, 36, 37, vorzugsweise in Reihenschaltung, zugeschaltet werden.

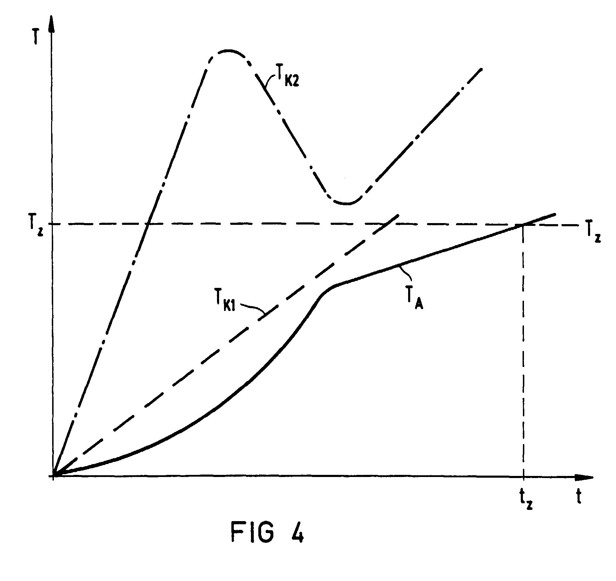

Wie anhand von Figur 4 näher erläutert wird, können beim Betrieb elektrisch beheizbarer Katalysatoren verschiedene alternative Systeme benutzt werden. Im Diagramm der Figur 4 ist auf der Ordinate die Temperatur T gegen die Zeit t auf der Abzisse aufgetragen. Mit $T_z$ ist die Zündtemperatur eines üblichen Katalysators, beispielsweise etwa 350 °C, bezeichnet und mit $t_z$ der Zündzeitpunkt, d. h. der Zeitpunkt, bei dem die katalytische Reaktion in nennenswertem Umfange einsätzt. Die Kurve $T_A$ zeigt den Verlauf der Abgastemperatur vor dem Katalysator in Abhängigkeit von der Zeit nach dem Anlassen des Motors. Die gestrichelte Kurve $T_{K1}$ zeigt den Temperaturverlauf in einem elektrisch beheizten Katalysator-Trägerkörper. Wählt an die Heizleistung für einen Katalysator-Trägerkörper so, daß sich seine Temperatur $T_{K1}$ immer etwas oberhalb der Abgastemperatur $T_A$ befindet, so vermeidet man, daß dem Abgas Wärme zur Aufheizung des Katalysator-Trägerkörpers entzugen wird. Man kann zwar mit der elektrischen Leistung nicht das Abgas selbst nennenswert aufheizen, jedoch wird eine Abkühlung vermieden. Bei dieser Betriebsweise wird die keramische und die katalytisch aktive Masse des Katalysators von außen durch das Abgas und von innen durch den Katalysator-Trägerkörper gleichzeitig aufgeheizt und erreicht dadurch deutlich eher die Temperatur $T_z$, bei der die (exotherme) Reaktion einsetzt und von selbst für eine weitere Aufheizung sorgt. Wegen der nicht beliebig hohen verfügbaren elektrischen Leistung zum Aufheizen der Katalysatoren kann es nötig sein, gemäß einer Schaltung der Figur 3 zunächst nur einen Teilbereich, nämlich die vorderste Scheibe eines Katalysators von beispielsweise etwa 3,5 bis 6 cm axialer Höhe zu beheizen, um dort die exotherme Reaktion möglichst schnell in Gang zu bringen. Einen möglichen Temperaturverlauf für diese Scheibe zeigt die mit $T_{K2}$ bezeichnete Kurve. Dabei wird die Temperatur mit einem hohen, auf einen kleinen Teilbereich begrenzten Kurzschlußstrom sehr schnell stark erhöht, beispielsweise auf 600 °C und dann auf die Beheizung der anderen Katalysator-Teilbereiche umgeschaltet. Dadurch kühlt sich die erste Scheibe zwar wieder etwas ab, jedoch unterschreitet sie bei genügender Vorheizung nicht mehr die Zündtemperatur und hält dadurch die exotherme Reaktion mit dem Abgas in Gang, was wiederum die nachfolgenden Teilbereiche in ihrem Ansprechverhalten begünstigt.

An dieser Stelle seien einige prinzipielle Überlegungen bezüglich der elektrischen Beheizung von Katalysatoren eingefügt. Folgende Punkte sind dabei zu beachten:

a) Sofern Katalysatoren noch vor dem Anlassen des Motors vorgeheizt werden sollen, muß ihre Leistungsaufnahme insgesamt etwa der einer Diesel-Vorglühanlage entsprechen, um die Batterie nicht zu sehr zu belasten und trotzdem das Ansprechverhalten der Katalysatoren deutlich zu beeinflussen.

b) Falls die Katalysatoren erst nach dem Anlassen des Motors beheizt werden, können sie mit höherer Leistung versorgt werden, jedoch ist die zulässige Belastung der Lichtmaschine und die im Rahmen der erforderlichen Verkabelung maximale sinnvolle Stromstärke zu berücksichtigen. Insbesondere müssen Gesichtspunkte der Feuergefährlichkeit der elektrischen Anlagen beachtet werden.

Unter diesen Vorgaben ist davon auszugehen, daß für die elektrische Beheizung von Katalysatoren bei mit 12 Volt Spannung arbeitenden elektrischen Anlagen Stromstärken von etwa 5 bis 50 Ampere zur Beheizung von Katalysatoren oder einzelnen Katalysator-Bereichen benötigt werden. Dies bedeutet, daß der elektrische Widerstand der zur Beheizung der Katalysatoren dienenden Strompfade, wie in der Beschreibungseinleitung bereits erläutert, bestimmte Werte nicht über- bzw. unterschreiten sollen. Bei aus einzelnen Blechlagen aufgebauten Katalysator-Trägerkörpern läßt sich für den Widerstand R folgende Beziehung ermitteln:

$$R = \frac{\rho \cdot L}{z \cdot b \cdot h}$$

mit

$\rho$ = spez. elektr. Widerstand
L = Lagenlänge (ggf. unterschiedlich für glatte und gewellte Bleche)
b = Foliendicke
h = Folienhöhe
z = Lagenzahl

Ist ein Katalysator aus N Katalysatorscheiben mit der Höhe h aufgebaut, so ist der Widerstand bei Reihenschaltung noch entsprechend mit N zu multiplizieren.

Für die von einem Strom I in einem Leiter erzeugte Wärme gilt:

$$Q = U \cdot I \cdot t = I^2 \cdot R$$

mit

Q = Wärmemenge
U = Spannung
I = Strom
t = Zeit
R = Widerstand

Für die zum Aufheizen eines Körpers auf die Temperatur T benötigte Wärmemenge gilt:

$$Q = c \cdot m \cdot \Delta T$$

mit

c = spez. Wärme
m = Masse
$\Delta T$ = Temperaturdifferenz,

woraus eine Aufheizzeit durch reine elektrische Widerstandsbeheizung von

$$t_{e1} = \frac{c \cdot m \cdot \Delta T}{U \cdot I}$$

folgt. Die tatsächliche Aufheizzeit unter Einbeziehung der dem Katalysator durch die Abwärme des Motors zugeführte Wärmemenge ist deutlich kürzer, nach Erfahrungswerten nur etwa. $\frac{1}{2} t_{e1}$.

Die im folgenden beschriebenen Ausführungsbeispiele der Erfindung zeigen verschiedene Möglichkeiten, Katalysator-Trägerkörper aus metallischen Blechen so aufzubauen, daß Strompfade mit einem für eine elektrische Beheizung geeigneten Widerstand entstehen. Dabei ist die Erfindung nicht auf die Ausführungsbeispiele beschränkt, sondern soll auch die fachmännischen Abwandlungen und nach dem Stand der Technik äquivalente Ausführungsformen betreffen.

Insbesondere braucht es sich bei den Blechlagen nicht um abwechselnd angeordnete glatte und gewellte Blechlagen zu handeln, sondern es können auch andersartig strukturierte Bleche, wie sie in vielen Variationen im Stand der Technik bekannt sind, gleichermaßen verwendet werden.

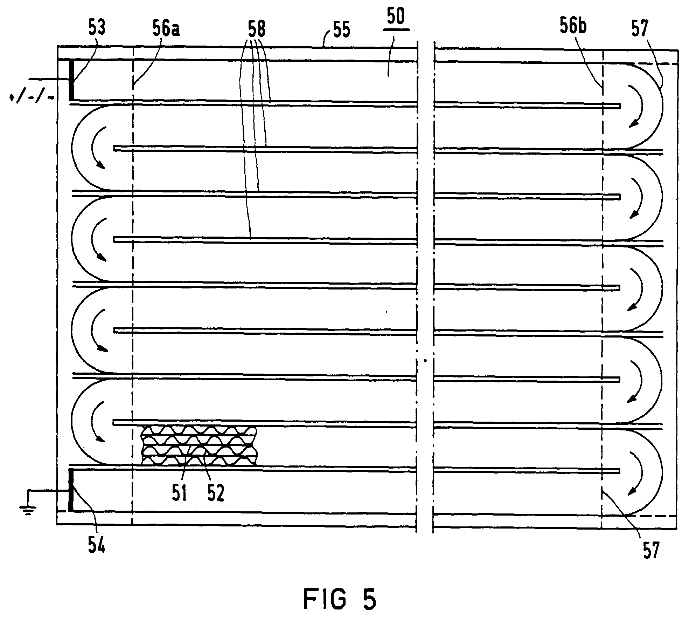

Figur 5 zeigt einen mäanderförmig geschichteten Katalysator-Trägerkörper 50, welcher aus einem immer wieder mit Umlenkungen 57 versehenen Stapel von glatten 51 und gewellten 52 Blechen besteht. Im vorliegenden Ausführungsbeispiel wird der Stapel durch vier gewellte 52 und drei glatte Blechlagen 51 gebildet, wobei die Ober- und die Unterseite des Stapels aus gewellten Blechlagen bestehen. Zwischen den Mäanderschleifen sind jeweils elektrisch isolierende Zwischenschichten 58 angeordnet, die einen direkten elektrischen Kontakt zwischen den einzelnen Mäanderschleifen verhindern. An den Enden des Stapels sind dessen Bleche jeweils leitend miteinander verbunden und mit einer Stromzuleitung 53 und einer Stromableitung 54, bzw. dafür geeigneten Anschlußstücken versehen. Der ganze Körper ist in einem Gehäuse oder Mantelrohr 55 angeordnet. An den Stirnseiten weist der Bereich der Umlenkungen 57 gestrichelt angedeutete Randabdeckungen 56a, 56b auf, welche einerseits unerwünschte Strömungen zwischen den Umlenkungen 57 und dem Gehäuse 55 verhindern und andererseits die Mäanderschleifen und isolierenden Zwischenschichten 58 fixieren. Der Widerstand einer solchen Anordnung kann in weiten Grenzen durch die Zahl der Bleche in dem mäanderförmigen Blechstapel variiert werden, Außerdem können mit dieser Art der Anordnung auch nicht rechteckige Querschnitte ausgefüllt werden.

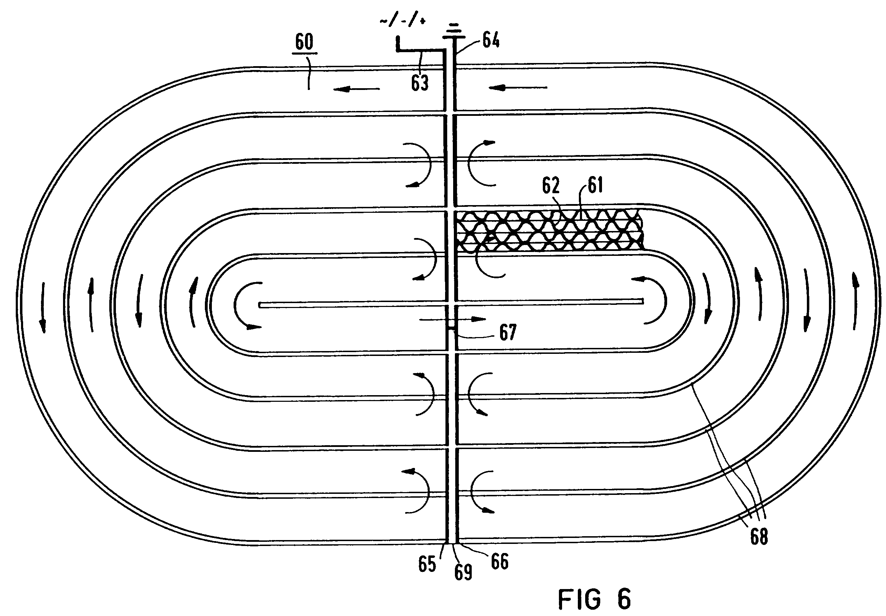

Figur 6 zeigt beispielhaft eine an sich bekannte Katalysatoranordnung mit U-förmig gebogenen glatten 61 und gewellten 62 Blechlagen, welche mit ihren Enden an einer Tragwand 65, 66, 69 befestigt sind. Erfindungsgemäß ist auch diese Anordnung durch isolierende Zwischenschichten 68 und eine spezielle Unterteilung der Tragwand 65, 66, 69 in elektrisch leitende 65, 66 Abschnitte und eine elektrisch isolierende Struktur 69 so unterteilt, daß sich Strompfade mit einem geeigneten Widerstand ergeben. Wie durch Pfeile angedeutet, fließt der Strom nacheinander durch verschiedene Gruppen von U-förmigen, einander benachbarten Blechen, wobei elektrisch leitfähige Abschnitte der Tragwand jeweils die Verbindung zur nächsten Gruppe herstellen. Im Inneren des Körpers weist die Tragwand eine durchgehende elektrische Verbindung 67 zu einem gegenüberliegenden elektrisch leitfähigen Abschnitt auf, so daß auf beiden Seiten der Tragwand 69 liegende Gruppen von U-förmigen Blechen in die Stromzuführung einbezogen werden. Die Stromableitung 64 erfolgt bei diesem Ausführungsbeispiel nahe der Stromzuleitung 63. Der ganze Katalysator-Trägerkörper 60 muß ggf. noch in einem nicht dargestellten Mantelrohr angeordnet werden, dem gegenüber die äußersten Blechlagen ggf. isoliert sein müssen und durch welches die Stromzuleitung 63 und die Stromableitung 64 ggf. isoliert hindurchgeführt werden müssen.

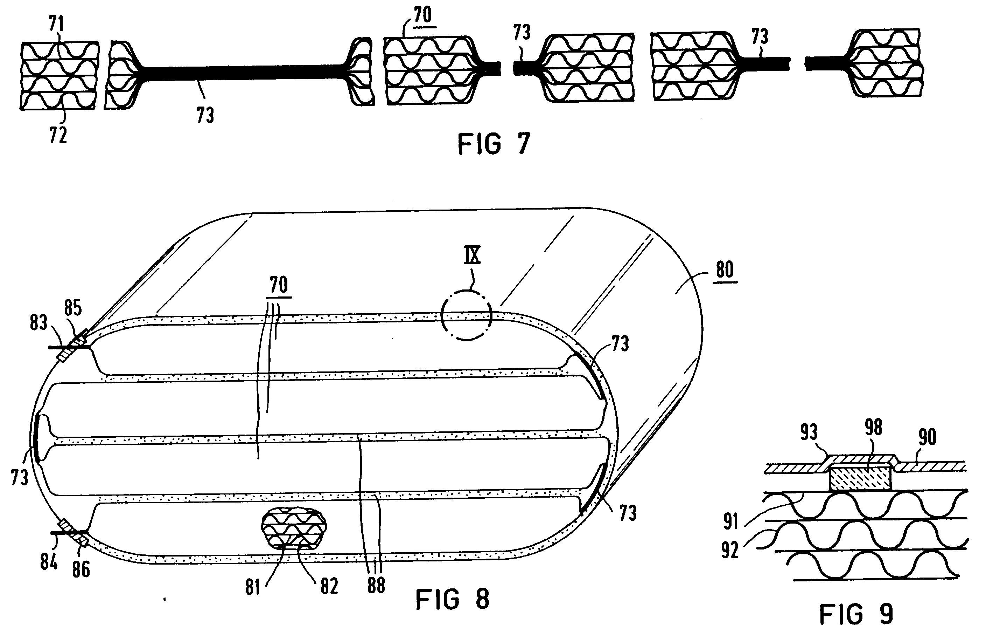

Ein weiteres Ausführungsbeispiel der Erfindung wird in den Figuren 7, 8 und 9 dargestellt. Figur 7 zeigt einen Teil eines sehr lang gestreckten Blechstapels 70, welcher zumindest abschnittsweise aus glatten 71 und gewellten 72 Blechstreifen besteht. Dieser Stapel hat in Abständen Einschnürungen 73. Solche Einschnürungen können entweder entstehen, wenn die gewellten Bleche 72 abschnittsweise nicht gewellt sind oder aber durch Zusammenquetschen des Stapels in den gewünschten Bereichen. Es ist beispielsweise auch möglich, einen solchen Stapel zunächst ohne Einschnürungen herzustellen und an den Berührungsstellen zwischen glatten 71 und gewellten 72 Blechen zu verlöten und dann erst die Einschnürungen zusammenzuquetschen. Aus einem so gestalteten Stapel kann ein Katalysator-Trägerkörper 80, wie in Figur 8 dargestellt, geschichtet werden. Es handelt sich im Prinzip wieder um eine mäanderförmige Schichtung, nur daß hierbei die Umlenkungen von den Einschnürungen 73 des Stapels 70 gebildet werden. Auf diese Weise lassen sich gewünschte Querschnittsformen leichter herstellen und unregelmäßig gestaltete Randbereiche verkleinern. Die glatten 81 und gewellten 82 Bleche des Stapels werden an den Enden elektrisch leitend verbunden und enden in einer Stromzuleitung 83 bzw. einer Stromableitung 84, welche durch Isolierstücke 85, 86 durch ein den Körper umgebendes Mantelrohr geführt sind. Die einzelnen Mäanderschleifen und auch die Außenseite des Stapels sind mittels Isolierschichten 88 voneinander und vom Mantelrohr elektrisch getrennt. Figur 9 zeigt einen vergrößerten Ausschnitt aus Figur 8 mit einem Beispiel für eine mögliche Isolation gegenüber dem Mantelrohr. Das Mantelrohr 90 kann beispielsweise Taschen 93 aufweisen, in welche Keramikplättchen eingelegt und ggf. dort angelötet sind. Diese Keramikplättchen 98 halten den Stapel aus glatten 91 und gewellten 92 Blechen auf Abstand vom Mantelrohr 90, wodurch sowohl eine elektrische wie eine thermische Isolation erreicht wird. Als Isolation kommen jedoch auch keramische Fasermatten oder andere keramische Materialien in Betracht.

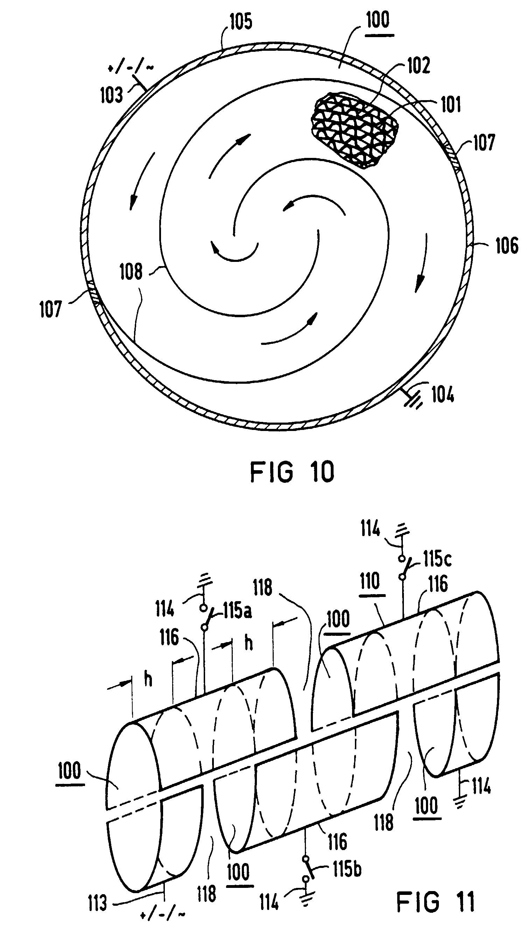

Figur 10 zeigt ein weiteres besonders günstiges Ausführungsbeispiel der Erfindung, nämlich einen an sich bekannten Katalysator-Trägerkörper 100 aus einem Stapel gegensinnig verschlungener glatter 101 und gewellter 102 Bleche. Ein solcher Aufbau von Katalysatorkörpern ist an sich bekannt und wird häufig als S-förmig bezeichnet. Diese Ausführungsform bietet die Möglichkeit, die Ober- und Unterseite des Stapels mit Isolierschichten 108 oder einer isolierenden Beschichtung zu versehen, wodurch beim gegensinnigen Verschlingen des Stapels ein relativ langer elektrischer Strompfad, wie er durch Pfeile angedeutet ist, entsteht. Seine Länge hängt vom Verhältnis der Höhe des Ausgangsstapels zum Durchmesser des Katalysator-Trägerkörpers ab. Sofern die Blechlagen 101, 102 mit ihren Enden an voneinander isolierten elektrisch leitenden Halbschalen 105, 106 befestigt sind, lassen sich an diesen Halbschalen eine Stromzuleitung 103 und eine Stromableitung 104 anbringen. Die Halbschalen 105, 106 müssen dazu beispielsweise durch Isolierstücke 107 voneinander getrennt sein, wobei die Isolierschichten 108 gerade im Bereich dieser Isolierstücke 107 enden müssen. Die ganze Anordnung wird üblicherweise noch elektrisch isoliert in einem nicht dargestellten Mantelrohr untergebracht, durch welches die Stromzuleitung 103 und die Stromableitung 104 isoliert hindurchgeführt werden müssen. Generell kann bei praktisch allen Ausführungsbeispielen auch auf die Stromableitung verzichtet werden, wenn eine gut leitende Verbindung zum Gehäuse und damit zur Masse des Kraftfahrzeuges hergestellt wird. Mit gegensinnig verschlungenen Blechen lassen sich im übrigen auch viele andere Querschnitte in an sich bekannter Weise ausfüllen, so daß dieses Ausführungsbeispiel nicht auf runde Querschnitte beschränkt ist.

Sollte der erzielbare elektrische Widerstand eines gemäß Figur 10 aufgebauten elektrisch beheizbaren Katalysator-Trägerkörpers in Anbetracht der gewünschten axialen Länge nicht hoch genug sein, so kann eine Zusammenschaltung von mehreren hintereinander angeordneten Scheiben beispielsweise gemäß Figur 11 erfolgen. Das dort dargestellte Ausführungsbeispiel besteht aus vier hintereinander geschalteten, gemäß Figur 10 ausgebildeten Scheiben 100 der Höhe h, wobei die Reihenschaltung der einzelnen Scheiben durch je zwei Scheiben erfassende Halbzylinderschalen 116 angedeutet ist. Der gesamte Körper weist eine Stromzuleitung 113 auf und bis zu vier Stromableitungen 104, welche jeweils über Kurzschlußschalter 115a, 115b, 115c zu- bzw. abgeschaltet werden können. Spalte 118 zwischen den einzelnen Scheiben 100 sorgen für die elektrische Isolierung in axialer Richtung, während der ganze Körper wiederum elektrisch isoliert in einem nicht dargestellten Mantelrohr untergebracht werden kann. Die schematisch angedeutete elektrische Schaltung dieser Anordnung ermöglicht folgende Betriebsweise: Zu Beginn kann die in Abgasrichtung gesehen vorderste Scheibe 100 durch Schließen des Schalters 115a allein mit einem sehr hohen, dem Widerstand der Scheibe entsprechenden Strom beaufschlagt werden. Sie heizt sich daher schnell gemäß dem Anfang der Kurve $T_{K2}$ aus Figur 4 auf. Nach Ablauf eines bestimmten Zeitintervalls, beispielsweise 10 Sekunden, kann der Schalter 115a geöffnet werden, so daß bei geöffneten Schaltern 115b, 115c sämtliche Scheiben einen um einen Faktor 4 geringeren Heizstrom zur weiteren Aufheizung erhalten. Auch ein in vorgegebenen Zeitintervallen aufeinanderfolgendes einzelnes Öffnen der Schalter 115a, 115b und 115c ist möglich, um den Katalysator scheibenweise mit abnehmender Leistung aufzuheizen. Dies ermöglicht ein schnelles Anspringen des Katalysators bei gleichzeitig nur kurzzeitig hohem Stromverbrauch.

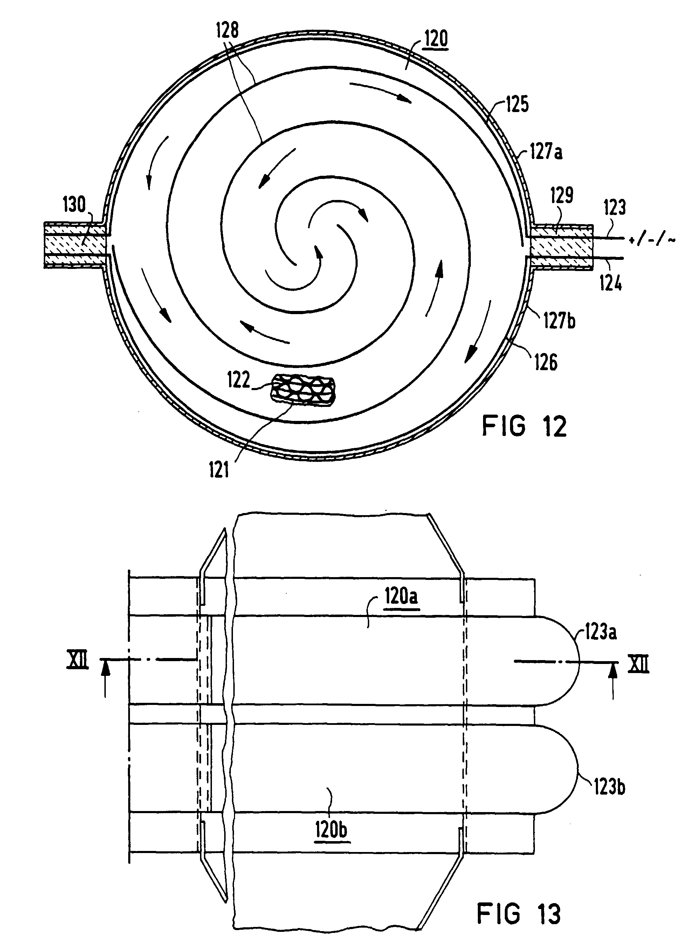

Die Figuren 12 und 13 zeigen nochmals einen S-förmigen, elektrisch beheizbaren Katalysator-Trägerkörper in einem Querschnitt (Figur 12) und einem Längsschnitt (Figur 13). In Figur 12 ist neben dem der Figur 10 entsprechenden eigentlichen Katalysator-Trägerkörper 120 aus gegensinnig verschlungenen glatten 121 und gewellten 122 Blechen auch die Einbindung des Systems und der Anschlüsse in ein Mantelrohr 127a, 127b dargestellt. Das Mantelrohr besteht aus zwei Halbschalen 127a, 127b, welche durch keramische Isolierungen 129, 130 elektrisch voneinander getrennt sind. Innerhalb dieser Halbschalen 127a, 127b und elektrisch von diesen isoliert verlaufen weitere Halbschalen 125, 126, welche mit der Stromzuleitung 123 bzw. der Stromableitung 124 in Verbindung stehen. Der elektrische Aufbau und die Isolierschichten 128 entsprechen dem der Figur 10. Die Leitungen 123, 124 werden durch das Keramikstück 129 nach außen geführt. Wie aus Figur 13 zu erkennen ist, können beispielsweise zwei solche Katalysator-Trägerkörper 120a, 120b hintereinander und elektrisch in Reihe geschaltet in einem Mantelrohr untergebracht werden.

Die vorliegende Erfindung und die genannten Ausführungsbeispiele eignen sich prinzipiell sowohl für die elektrische Beheizung von Startkatalysatoren wie auch für die Beheizung von Hauptkatalysatoren, soweit genügend elektrische Leistung zur Verfügung steht. Die Zusammenschaltung von mehreren Katalysator-Trägerkörpern parallel oder in Reihe ist je nach den gegebenen Umständen und Dimensionen möglich. Bei laufendem Motor und Stromerzeugung durch die Lichtmaschine können die Katalysatoren auch direkt durch Wechselstrom beheizt werden, wodurch nicht die gesamte benötigte Leistung zunächst gleichgerichtet werden muß. Im Gegensatz zu anderen elektrischen Einrichtungen am Fahrzeug sind die Katalysator-Trägerkörper unempfindlich gegen Spannungsschwankungen und können somit ggf. auch von einer ungeregelten, zusätzlicher Spannungsversorgung gespeist werden. Die erfindungsgemäßen elektrisch beheizbaren Katalysator-Trägerkörper eignen sich zur Reduzierung des Schadstoffausstoßes bei besonders strengen Anforderungen an die Emissionen in der Kaltstartphase eines Fahrzeuges.

**Patentansprüche**

1. Anordnung zur Beschleunigung des Ansprechens einer katalytisch wirkenden Abgasreinigungsvorrichtung hinter einem Verbrennungsmotor, enthaltend mindestens einen metallischen, elektrisch direkt und ganz beheizbaren Vorkatalysator (11a; 11b; 12a; 12b; 16a; 16b), wobei der stromaufwärts vor mindestens einem Hauptkatalysator (17a, 18a; 17b, 18b) angeordnete Vorkatalysator (11a; 11b; 12a; 12b; 16a; 16b) aus gewickelten, gestapelten oder anderweitig geschichteten Lagen strukturierter hochtemperaturkorrosionsfester Trägerbleche (51, 52; 61, 62; 71, 72; 81, 82; 91, 92; 101, 102; 121, 122) besteht, die eine Vielzahl von für ein Fluid durchströmbaren Kanälen bilden, dadurch gekennzeichnet, daß die Trägerbleche (51, 52; 61, 62; 71, 72; 81, 82; 91, 92; 101, 102; 121, 122) eine Dicke von etwa 0,03 bis 0,06 mm aufweisen, und der Vorkatalysator (11a; 11b; 12a; 12b; 16a; 16b) durch Spalte (118) und/oder elektrisch isolierende Zwischenschichten (58; 68; 88; 108; 128) bzw. Beschichtungen bezüglich-seiner Querschnittsfläche und/oder seiner axialen Ausdehnung elektrisch so unterteilt ist, daß sich mindestens ein elektrischer Strompfad durch die Trägerbleche (51, 52; 61, 62; 71, 72; 81, 82; 91, 92; 101, 102; 121, 122) ergibt, wobei alle diese gebildeten Strompfade einen elektrischen Widerstand zwischen 0,2 und 2 Ohm haben, vorzugsweise zwischen 0,4 und 1 Ohm, insbesondere etwa 0,6 Ohm.

2. Anordnung nach Anspruch 1, **dadurch gekennzeichnet**, daß der Vorkatalysator (16a; 16b) unmittelbar vor dem Hauptkatalysator (17a, 18a; 17b, 18b) angeordnet ist.

3. Anordnung nach Anspruch 1, **dadurch gekennzeichnet**, daß der Vorkatalysator (12a; 12b) unmittelbar vor einer Mischstrecke (13) der Abgasreinigungsvorrichtung angeordnet ist, in welcher bei einem Dreiwegekatalysator die gewünschte Luftmenge beigemischt und gemessen (14) wird.

4. Anordnung nach Anspruch 1, **dadurch gekennzeichnet**, daß der Vorkatalysator (11a; 11b) unmittelbar hinter dem Auslaß des Motors in der Motorauslaßleitung (10a; 10b) angeordnet ist.

5. Anordnung nach einem der Ansprüche 1 bis 4, **dadurch gekennzeichnet**, daß eine Mehrzahl von Vorkatalysatoren (11a, 11b; 12a, 12b; 16a, 16b) vorhanden ist und die Vorkatalysatoren (11a, 11b; 12a, 12b; 16a, 16b) elektrisch in Reihe geschaltet sind.

6. Anordnung nach einem der Ansprüche 1 bis 4, **dadurch gekennzeichnet**, daß eine Mehrzahl von Vorkatalysatoren (11a, 11b; 12a, 12b; 16a, 16b) vorhanden ist und die Vorkatalysatoren elektrisch parallel geschaltet sind.

7. Verfahren zum Betrieb einer Anordnung zur Beschleunigung des Ansprechens einer katalytisch wirkenden Abgasreinigungsvorrichtung hinter einem Verbrennungsmotor, nach einem der Ansprüche 1-6 wobei der Vorkatalysator (11a; 11b; 12a; 12b; 16a; 16b) für ein vorgebbares Zeitintervall von etwa 20 bis 60 sec nach dem Betriebsbeginn des Motors mit einem elektrischen Strom beheizt wird, so daß er sich schneller als der Abgasstrom des Motors aufheizt.

## Claims

1. An arrangement for accelerating the response of a catalytically active exhaust gas cleaning apparatus downstream of an internal combustion engine including at least one metallic, electrically directly and entirely heatable pre-catalyst (11a; 11b; 12a; 12b; 16a; 16b) wherein the pre-catalyst (11a; 11b; 12a; 12b; 16a; 16b) which is arranged upstream of at least one main catalyst (17a, 18a; 17b, 18b) comprises wound, stacked or otherwise layered layers of structured carrier plates (51, 52; 61, 62; 71, 72; 81, 82; 91, 92; 101, 102;. 121, 122) which are resistant to high-temperature corrosion and which form a plurality of passages through which a fluid can flow, characterised in that the carrier plates (51, 52; 61, 62; 71, 72; 81, 82; 91, 92; 101, 102; 121, 122) are of a thickness of about 0.03 to 0.06 mm and the pre-catalyst (11a; 11b; 12a; 12b; 16a; 16b) is electrically subdivided in respect of its cross-sectional area and/or its axial extent by gaps (118) and/or electrically insulating intermediate layers (58; 68; 88; 108; 128) or coatings, so that there is at least one electrical current path through the carrier plates (51, 52; 61, 62; 71, 72; 81, 82; 91, 92; 101, 102; 121, 122), wherein all said formed current paths have an electrical resistance of between 0.2 and 2 ohms, preferably between 0.4 and 1 ohm, in particular about 0.6 ohm.

2. An arrangement according to claim 1 characterised in that the pre-catalyst (16a; 16b) is arranged immediately upstream of the main catalyst (17a, 18a; 17b, 18b).

3. An arrangement according to claim 1 characterised in that the pre-catalyst (12a; 12b) is arranged immediately upstream of a mixing section (13) of the exhaust gas cleaning apparatus, in which, in the case of a three-way catalyst, the desired amount of air is added and measured (14).

4. An arrangement according to claim 1 characterised in that the pre-catalyst (11a; 11b) is arranged immediately downstream of the outlet of the engine in the engine exhaust manifold (10a; 10b).

5. An arrangement according to one of claims 1 to 4 characterised in that there is provided a plurality of pre-catalysts (11a, 11b; 12a, 12b; 16a, 16b) and the pre-catalysts (11a, 11b; 12a, 12b; 16a, 16b) are electrically connected in series.

6. An arrangement according to one of claims 1 to 4 characterised in that there is a plurality of pre-catalysts (11a, 11b; 12a, 12b; 16a, 16b) and the pre-catalysts are electrically connected in parallel.

7. A method of operating an arrangement for accelerating the response of a catalytically active exhaust gas cleaning apparatus downstream of an internal combustion engine according to one of claims 1 to 5 wherein the pre-catalyst (11a; 11b; 12a; 12b; 16a; 16b) is heated with an electrical current for a predeterminable period of time of about 20 to 60 seconds after operation of the engine begins so that it heats up more quickly than the exhaust gas flow of the engine.

## Revendications

1. Dispositif pour accélérer la réaction d'un dispositif d'épuration des gaz d'échappement agissant de façon catalytique et placé après un moteur à combustion interne, contenant au moins un précatalyseur métallique (11a ; 11b ; 12a ; 12b ; 16a ; 16b) qui peut être chauffé directement et totalement de façon électrique, le précatalyseur (11a ; 11b ; 12a ; 12b ; 16a ; 16b) disposé en amont d'au moins un catalyseur principal (17a, 18a ; 17b, 18b) étant constitué de couches enroulées, empilées ou superposées d'une autre façon, de tôles de support (51, 52 ; 61, 62 ; 71, 72 ; 81, 82 ; 91, 92 ; 101, 102 ; 121, 122) qui sont structurées et résistantes à la corrosion à haute température et qui forment de nombreux canaux à travers lesquels peut passer un fluide, caractérisé en ce que les tôles de support (51, 52 ; 61, 62 ; 71, 72 ; 81, 82 ; 91, 92 ; 101, 102 ; 121, 122) ont une épaisseur de 0,03 à 0,06 mm environ, et le précatalyseur (11a ; 11b ; 12a ; 12b ; 16a ; 16b) est divisé électriquement suivant sa surface de section et/ou son extension axiale par des fentes (118) et/ou par des couches intermédiaires ou revêtements (58 ; 68 ; 88 ; 108 ; 128) électriquement isolants, de telle sorte qu'il se forme au moins une voie de courant électrique à travers les tôles de support (51, 52 ; 61, 62 ; 71, 72 ; 81, 82 ; 91, 92 ; 101, 102 ; 121, 122), toutes les voies de courant ainsi formées ayant une résistance électrique comprise entre 0,2 et 2 Ohm, de préférence entre 0,4 et 1 Ohm, notamment 0,6 Ohm environ.

2. Dispositif selon la revendication 1, caractérisé en ce que le précatalyseur (16a ; 16b) est agencé immédiatement avant le catalyseur principal (17a, 18a ; 17b, 18b).

3. Dispositif selon la revendication 1, caractérisé en ce que le précatalyseur (12a ; 12b) est agencé immédiatement avant une voie de mélange (13) du dispositif d'épuration de gaz d'échappement dans laquelle la quantité d'air souhaitée est ajoutée et mesurée (14) dans le cas d'un catalyseur à trois voies.

4. Dispositif selon la revendication 1, caractérisé en ce que le précatalyseur (11a ; 11b) est agencé immédiatement après l'échappement du moteur dans la conduite d'échappement (10a ; 10b) du moteur.

5. Dispositif selon l'une des revendications 1 à 4, caractérisé en ce que plusieurs précatalyseurs (11a, 11b ; 12a, 12b ; 16a, 16b) sont présents et que les précatalyseurs (11a, 11b ; 12a, 12b ; 16a, 16b) sont branchés électriquement en série.

6. Dispositif selon l'une des revendications 1 à 4, caractérisé en ce que plusieurs précatalyseurs (11a, 11b ; 12a, 12b ; 16a, 16b) sont présents et que les précatalyseurs sont branchés électriquement en parallèle.

7. Procédé pour faire fonctionner un dispositif, destiné à accélérer la réaction d'un dispositif d'épuration des gaz d'échappement, agissant de façon catalytique et placé après un moteur à combustion interne, et selon l'une des revendications 1 à 6, le précatalyseur (11a ; 11b ; 12a ; 12b ; 16a ; 16b) étant chauffé avec un courant électrique pendant un intervalle de temps qui peut être prescrit et qui dure environ 20 à 60 secondes après la mise en marche du moteur, de telle sorte que ce précatalyseur est chauffé plus rapidement que le flux de gaz d'échappement du moteur.

FIG 1

FIG 2

FIG 3

FIG 4

FIG 5

FIG 6

~/-/+

60

64

63

62  61

65  69  66

67

68

EP 0 412 086 B1

13

FIG 7

FIG 8

FIG 9

EP 0 412 086 B1

FIG 10

FIG 11

FIG 12

FIG 13